# EUROPEAN PATENT SPECIFICATION

(11) **EP 1 772 239 B1**
(45) Date of publication and mention of the grant of the patent: **09.10.2013**
(21) Application number: 06119486.6
(22) Date of filing: 24.08.2006
(51) Int. Cl.: B27G 19/02, B23D 45/02

(54) **Saw**
Säge
Scie

(30) Priority: 07.10.2005 GB 0520416; 10.02.2006 GB 0602658
(43) Date of publication of application: 11.04.2007
(73) Proprietor: Black & Decker, Inc., Newark, DE 19711 (US)
(72) Inventor: Rossetti, Mirco, 06125, PERUGIA (IT); Bettacchini, Marcello, 06074, PERUGIA (IT)
(74) Representative: Bell, Ian Stephen

(56) References cited:
- EP-A1- 0 242 733
- EP-A1- 0 633 106
- EP-A2- 0 972 601
- DE-U1- 8 900 108
- US-A- 4 660 448
- US-A- 5 257 570

## Description

The present invention relates to powered saws having a chopping and sliding function as per the preamble of claim 1. Such a saw is known from EP 0 242 733.

Chop saws comprise a motor unit pivotally mounted on a base. The motor unit is located above the base and can pivot between a high position where it is located further most away from the base to a low position where a circular saw blade, which is mounted on the motor unit and which is capable of being rotationally driven by a motor located within the motor unit, can engage with a work piece located on the base. A spring biases the motor unit to its upper most position.

Such saws have a sliding feature wherein the motor unit, in addition to be able to perform a pivotal or chopping movement, can slide linearly across the base to perform a slide cut. Furthermore, these types of saw can include mechanisms by which they are able to perform mitre and/or bevel cuts on work pieces located on the base. A saw which is capable of performing chop, sliding, bevel and mitre cuts is known as a sliding compound miter saw.

All of these types of saw usually comprise guards which surround at least a part of the edge of the saw blade in order to prevent the operator from touching the cutting edge. Typically, such saws comprise a fixed guard which surrounds the cutting edge of the top half of the cutting blade and a pivotal guard which is capable of surrounding the cutting edge of the lower half of the cutting blade. The pivotal guard is capable of being pivoted from a first position where it surrounds the cutting edge of the lower half of the cutting blade to a retracted position where the cutting edge of the lower half of the cutting blade is exposed so that the cutting blade can be used to cut a work piece. The purpose of the pivotal guard is to enable the cutting edge of the lower half of the circular saw blade to be surrounded when the saw blade is not being used to provide protection to the operator whilst allowing the cutting edge of the lower half of the circular saw blade to be exposed when it is required to perform the cutting function.

There are numerous mechanisms by which the pivotal guard can be pivoted from its first position to a retracted position.

WO98/18588 describes one such mechanism for use on a sliding compound mitre saw.

WO98/18588 discloses a sliding compound mitre saw which comprises a base 12 (using the same reference numbers as those used in WO98/18588) having a rotatable table 14 mounted within it. The rotatable table 14, in conjunction with a fence 26 fixed to the base 12, enables the sliding compound mitre saw to perform mitre cuts. Connected to the rear of the table 14 is a bevel mount 16 which is able to pivot about a horizontal axis in relation to the table 14. The pivotal movement of the bevel mount 16 in relation to the table 14 enables the sliding compound mitre saw to perform bevel cuts. Slideably mounted onto the bevel mount 16 are two guide rods 34 which are capable of sliding horizontally, back wards and forwards. The rods 34 enable the sliding compound mitre saw to perform sliding cuts. Pivotally mounted on the end of the guide rods 34 is a motor unit 36, which comprises a motor 22 for rotationally driving a circular saw blade 18 mounted on a drive spindle on the motor unit 36. The pivotal movement of the motor unit 36 in relation to the guide rods 34 enable the saw to perform chop cuts.

Rigidly mounted to the motor unit 36 is a fixed guard 40 which surrounds the cutting edge of the top half of the cutting blade 18. Pivotally mounted to the motor unit is a pivotal guard 42 which can pivot between a first position where it surrounds the cutting edge of the lower half of the cutting blade and a retracted position where the cutting edge of the lower half of the blade 18 is exposed for use in cutting.

The pivotal guard is pivoted between its two positions using a mechanical linkage which comprises a series of mechanical arms 48, 50, which are pivotally connected to each other and the saw, and cams 52, 54 which control the movement of the arms 48, 50. As the motor unit is pivoted downwards, the mechanical linkage causes the lower cutting edge of the blade to become exposed due to the retraction of the pivotal guard by the mechanical linkage.

The saw disclosed in WO98/18588 comprises rigid mechanical levers and therefore, due the rigid nature of the mechanical linkage and its way of operating, the saw assembly has to be so designed in order to accommodate it. As such, the way in which such saws using rigid link levers are constructed is restricted. In particular, in the design disclosed in WO98/18588, the distance between the axis of pivot of the motor unit 36 on the rods 38 and the axis of pivot of the pivotal guard 42 has to remain fixed.

EP0242733 discloses a different construction for a sliding compound mite saw to that disclosed in WO98/18588.

EP0242733 discloses a sliding compound mitre saw which comprises a base having a rotatable table mounted within it. The rotatable table, in conjunction with a fence fixed to the base, enables the sliding compound mitre saw to perform mitre cuts. Connected to the rear of the table is a bevel mount which is able to pivot about a horizontal axis in relation to the table. The pivotal movement of the bevel mount in relation to the table enables the sliding compound mitre saw to perform bevel cuts.

Pivotally mounted onto the bevel mount are two guide rods which are capable of pivoting about an axis, parallel to the axis of rotation of the saw blade of the saw, between an upper and lower position. This enables the saw to perform chop cuts.

Slidingly mounted on the guide rods is a motor unit, which comprises a motor for rotationally driving the circular saw blade mounted on a drive spindle on the motor unit 36. The sliding movement of the motor unit along the guide rods enables the saw to perform sliding cuts.

Rigidly mounted to the motor unit is a fixed guard which surrounds the cutting edge of the top half of the cutting blade. Pivotally mounted to the motor unit is a pivotal guard which can pivot between a first position where it surrounds the cutting edge of the lower half of the cutting blade and a retracted position where the cutting edge of the lower half of the blade is exposed for use in cutting.

The pivotal guard is pivoted between its two positions using a switch mounted on the handle which is mechanically linked to the pivotal guard. In use, the switch is depressed retracting the pivotal guard and then the saw can be operated.

Unlike the saw in WO98/18588, there is no device disclosed which causes the pivotal guard to retract when the motor unit is pivoted towards the base. The use of such a mechanical linkage as described in WO98/18588 can not be applied to saw in EP0242733 as the distance between the motor unit and the pivot axis, which is parallel to that of the axis of rotation of the cutting blade and about which the motor unit pivots towards or away from the base to perform a chopping action, varies as the motor unit slides along the two guide rods. This is in contrast to the design of saw in WO98/18588 where the distance between the motor unit and the pivot axis, parallel to that of the axis of rotation of the cutting blade and about which the motor unit pivots towards or away from the base to perform a chopping action, is fixed at a preset distance.

The object of the present invention is to provide an alternative and more versatile design of mechanical linkage for a saw having a chopping function and a sliding function, for example, as shown in EP0242733, in order to move at least one pivotal guard from an enclosed position to a retracted position by pivotal movement of the saw blade unit during a chopping action.

According to the present invention, there is provided a saw comprising the features of claim 1.

Three embodiments of the present invention will now be described with reference to the accompanying drawings of which:-
Figure 1 shows a perspective view of the first embodiment of the saw;
Figure 2 shows a computer generated schematic diagram of the saw with the saw assembly in the lower position;
Figure 3 shows a computer generated schematic diagram of the saw with the saw assembly (partially cut away) in the upper position;
Figure 4 shows a computer generated schematic diagram of part of the locking mechanism of the saw;
Figure 5 shows a computer generated schematic diagram of the second embodiment of the saw with the saw assembly in its lower position;
Figure 6 shows a computer generated schematic diagram of the second embodiment of the saw with the saw assembly in its upper position;
Figures 7A and 7B show the pivotal bracket in its two angular positions;
Figure 8 shows a computer generated schematic diagram of the third embodiment of the saw with the saw assembly in its lower position;
Figure 9 shows a computer generated schematic diagram of the third embodiment of the saw with the saw assembly in its upper position;
Figures 10A shows the cam follower of the third embodiment; and
Figure 10B shows a cross section of the cam follower of Figure 10A in the direction of Arrows N.

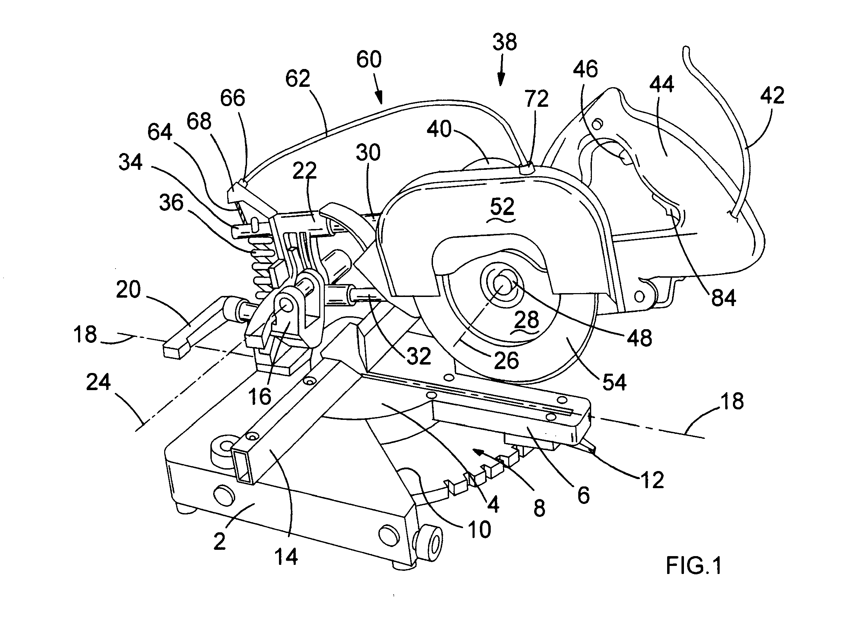

The first embodiment of the invention will now be described with reference to Figures 1 to 4.

Referring to Figure 1, the saw comprises a base 2 in which is mounted a circular table 4. The circular table 4 can rotate about a vertical axis. An arm 6 is attached to the front of the circular table 4 which extends through a recess 8 formed in the front of the base 2 and then forward of the base 2. As the circular table rotates, the arm 6 swings within the recess 8, the maximum amount of pivotal movement being limited by the sides 10 of the recess 8. A latch 12 is attached to the underside of the end of the arm 6 which is capable of releasably locking the angular position of the arm 6 within the recess 8 in well known manner. A fence 14 is rigidly attached to the base 2 and passes over the circular table 4.

Pivotally attached to the rear of the circular table 4 is a bevel support 16. The bevel support 16 can pivot about a horizontal bevel axis 18. The bevel support 16 can be locked in a range of angular positions relative to the circular table 4 using a locking handle 20. The mechanism by which the locking handle 20 locks the bevel support 16 is of no relevance to the present invention and therefore shall not be described in more any detail.

Pivotally mounted onto the bevel support 16 is a slide support 22. The slide support 22 can pivot about a chopping axis 24 which is parallel to the axis of rotation 26 of a cutting blade 28 (described further below).

Rigidly mounted within the slide support 22 are the ends of two straight rods 30; 32. The rods 30; 32 are prevented from sliding or rotating within the slide support 22. The rods 30, 32 are located one above the other and are parallel to each other. Attached to the end 34 of the top rod 30 is a spring 36. The other end of the spring 36 is attached to the bevel support 16. The spring 36 is under tension, biasing the end 34 of the top rod 30 downwardly, biasing the ends of the two rods 30, 32 located remotely from the slide support 22 upwardly due to the pivotal connection of the slide support 22 to the bevel support 16.

Slideably mounted onto the two rods 30, 32 is a saw assembly 38.

The saw assembly 38 comprises a motor housing 40 in which is mounted an electric motor (not shown). The electric motor is powered via an electric cable 42. Mounted on the rear of the motor housing 40 is a handle 44. A trigger switch 46 is mounted within the handle 44, which when depressed, activates the motor. A drive spindle 48 projects from the housing 40. A circular saw blade 28 is rigidly mounted onto the drive spindle 48. When the motor, is activated, the drive spindle rotates, rotatingly driving the saw blade 28. A fixed guard 52 is rigidly mounted onto the motor housing 40 and surrounds the top cutting edge of the saw blade 28. A pivotal guard 54 is pivotally mounted on the motor housing 40 and can pivot about the axis of rotation 26 of the saw blade 28. The pivotal guard 54 can pivot between an enclosed position where it surrounds the lower cutting edge of the saw blade 28 and a retracted position where it exposes the lower cutting edge of the saw blade 28. When the pivotal guard is in the retracted position, it is telescopically pivoted into the fixed guard 52. A pivotal guard spring (not shown) biases the pivotal guard 54 to the enclosed position.

The saw assembly 38 can slide along the two rods 30, 32 towards or away from the slide support 22.

In use, a work piece is placed on the base 2 and circular table 4 against the fence 14. The pivotal movement of the circular table 4 about the vertical axis allows the saw to perform mitre cuts on the work piece. The pivotal movement of the bevel support 16 in relation to the circular table 4 about the bevel axis 18 allows the saw to perform bevel cuts on the work piece. The pivotal movement of the slide support 22 on the bevel support 16 about the chopping axis 24 allows the saw to perform chop cuts on the work piece. The sliding movement of the saw assembly 38 along the two rods 30, 32 allows the saw to perform sliding cuts on the work piece.

The saw comprises a pivotal guard actuating mechanism. The pivotal guard actuating mechanism causes the pivotal guard to pivot to its retracted position when the saw assembly is pivoted about the chopping axis 24 from its upper position to its lower position. The spring 36 biases the saw assembly 38 to pivot about the chopping axis 24 to its upper most position. In this position, the pivotal guard 54 encloses the lower edge of the cutting blade 28. As the saw assembly is pivoted downwardly towards the circular table 4, the pivotal guard actuating mechanism causes the guard 54 to retract into the fixed guard 52, exposing the lower cutting edge of the blade 28.

The pivotal guard actuating mechanism will now be describe in more detail with references to figures 1, 2 and 3.

The pivotal guard actuating mechanism comprises a Bowden cable 60. The Bowden cable comprises an outer sleeve 62 and an inner cable 64. The Bowden cable has two ends, each end comprising two parts, one part being one end of the inner cable 64 and the other part being a corresponding end of the outer sleeve 62.

The first end of the Bowden cable 60 is connected across the pivot joint formed between the bevel support 16 and the sliding support 22. The end 66 of the sleeve 62 of the first end of the Bowden cable is rigidly connected to the sliding support 22 via a fixed support 68. The end 70 of the cable 64 of the first end of the Bowden cable 60 is connected to the bevel support 16.

The second end of the Bowden cable is connected across the pivot joint formed between the fixed guard 52 and the pivotal guard 54. The end 72 of the sleeve 62 of the second end of the Bowden cable 60 is rigidly connected to the fixed guard 52. The end 74 of the cable 64 of the second end of the Bowden cable 60 is connected to the pivotal guard 54. The cable 64, between its second end 74 and the fixed end 72 of the sleeve 62, wraps around a tube 76 which surrounds the drive spindle 48.

The pivotal guard actuating mechanism operates as follows.

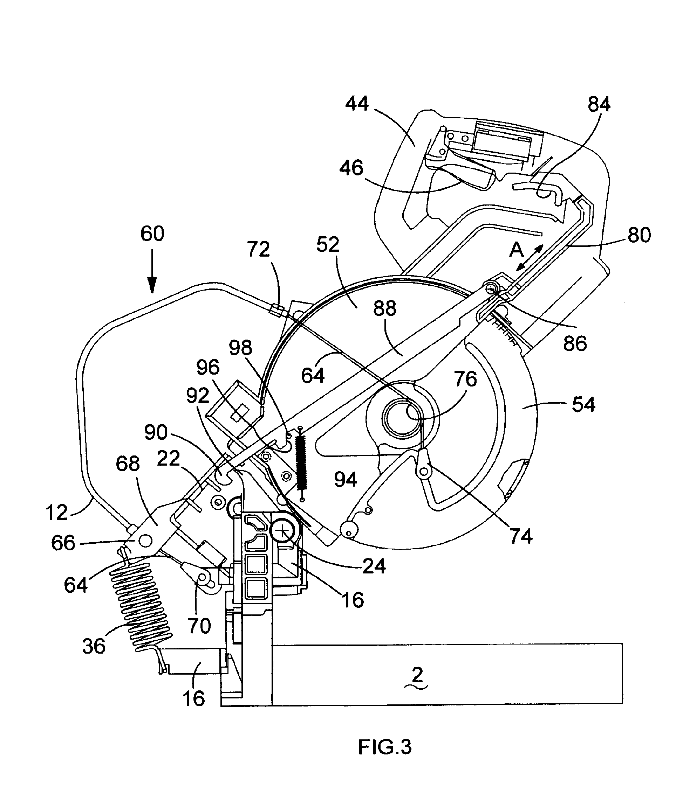

The saw assembly is biased to its upper position (as shown in Figure 3) by the spring 36 acting on the end 34 of the upper rod 30 (not shown in Figure 3). The pivotal guard spring biases the pivotal guard 54 to its enclosed position where it surrounds the lower cutting edge of the saw blade 28. When the pivotal guard is in this position, the end 74 of the cable 64 of the second end of the Bowden cable is pulled the furthest distance from the end 72 of the sleeve 62 of the second end of the Bowden cable by the pivot guard spring. In contrast, the end 70 of the cable 64 of the first end of the Bowden cable 60 is pulled into the sleeve 62, causing it to be at the shortest distance from the end 66 of the sleeve 62 of the first end of the Bowden cable 60.

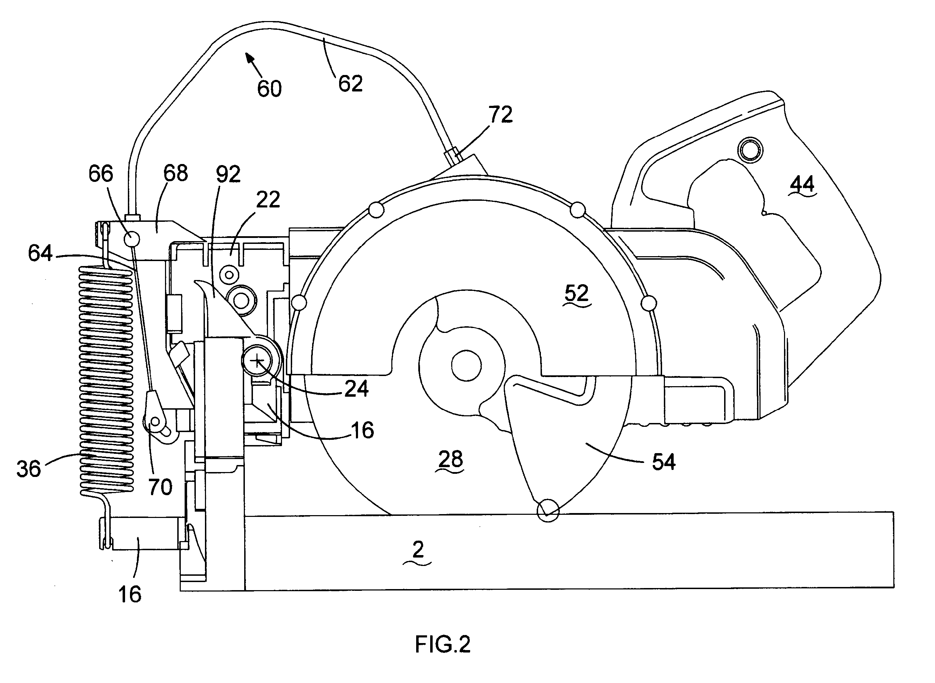

However, when the saw assembly is pivoted to its lowest position as shown in Figure 2, the distance between the end 70 of the cable 64 of the first end of the Bowden cable 60 from the end 66 of the sleeve 62 of the first end of the Bowden cable 60 is forced to increase. This is due to the fact that the position of the end 70 of the cable attached to the bevel support 16 remains stationary whilst the end 66 of the sleeve 62 attached to the sliding support 22 moves due to the relative pivotal movement between the bevel support 16 and the sliding support 22. The increase in this length results in a decrease in the length of cable 64 between the end 72 of the sleeve 62 connected to the fixed guard 52 and the end 74 of the cable 64 attached to the pivotal guard 54. As the cable 64 is retracted into the sleeve 62 at the second end of the Bowden cable 60, it travels around the tube 76 causes the pivotal guard 54 to pivot to its retracted position.

When the saw assembly is pivoted to its highest position, the distance between the end 70 of the cable 64 of the first end of the Bowden cable 60 from the end 66 of the sleeve 62 of the first end of the Bowden cable 60 is reduced allowing the pivotal guard 54 to pivot to its enclosed position due to the biasing force of the pivotal guard spring.

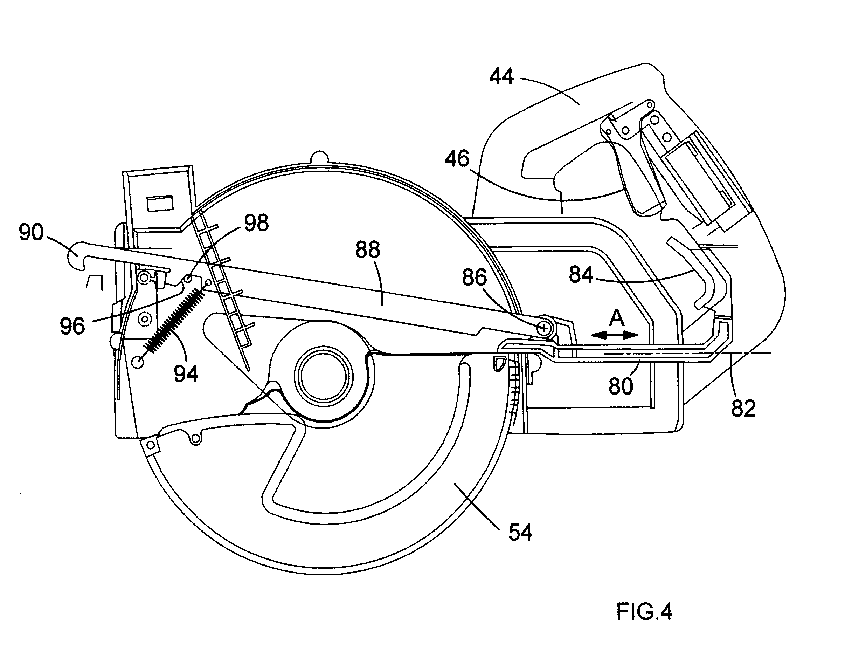

The saw also comprise a locking mechanism which will now be described with reference to Figure 4. When the saw is not in use, it is desirable to be able to lock the position of the saw assembly 38 relative to the bevel support 16 in a storage position. When the saw is not in use, the saw assembly moves to its upper most position (Figure 3) due to the biasing force of the spring 36. The saw assembly 38 then slides under gravity along the rods 30, 32 which are inclined due to the spring 36, towards and abuts against the sliding support 22. it is desirable to lock the saw assembly in this storage position and prevent accidental movement of the saw assembly 38 in relation to the bevel support 16.

The locking mechanism comprises a retracting rod 80 slideably mounted within the handle 44. The retraction rod 80 can slide along axis 82 in the direction indicated by Arrow A as shown in Figure 4. Formed on one end of the retraction rod 80 is a finger pad 84 which projects through the handle 44 and by which a user can engage the retraction rod 80 to release the locking mechanism.

Pivotally connected about point 86 to the other end of the retraction rod 80 is a locking rod 88. The locking rod 88 extends pass the fixed guard 52 towards the bevel support 16. A hook 90 is formed on the end of the locking rod 88 closest to the bevel support 16. A catch 92 (as seen in Figures 2 and 3) is mounted on the bevel support 16. When the saw assembly 38 is in its storage position as shown in Figure 3, the hook 90 engages with the catch 92 to lock the saw assembly 38 in this position. When the saw assembly is locked in this position, it can not pivot downwardly about axis 24 or slide along the rods 30, 32. The hook 90 is kept in engagement with the catch 92 via a spring 94, connected between the locking rod 88 and the motor housing 40, which biases the hook 90 downwardly.

Formed on the locking rod 88 in close proximity to the hook 90 is a cam surface 96. A peg 98 is formed on the motor housing 40 which engages with the can surface 96. The spring 94 biases the peg 98 and the cam surface 96 into engagement. When the hook 90 is engaged with the catch 92, the peg 98 is located in the upper most position along the cam surface 96 as shown in Figure 4.

In order to release the hook form the catch 92, an operator depresses the finger pad 84, moving it away from the bevel support 16 and causing the retraction rod 80 to slide along the axis 82. This in turn pulls the locking rod 88 away from the bevel support 16. This results in the peg 98 sliding along the cam surface 96 causing the locking rod 88 to move upwards against the biasing force the spring 94. This causes the hook 90 to be moved above the catch 92, allowing the operator to move the saw assembly 38 using the handle 44 either by pivoting it about axis 24 or sliding it along rods 30, 32. When the operator ceases to depress the finger pad 84, the biasing force of the spring 94 moves the hook downwardly.

In order to re-engage the hook 90 with the catch 92, the operator places the saw assembly in the storage position. As the saw assembly moves into the storage position, the hook 90 rides over and then engages with the catch 92 due to its shape.

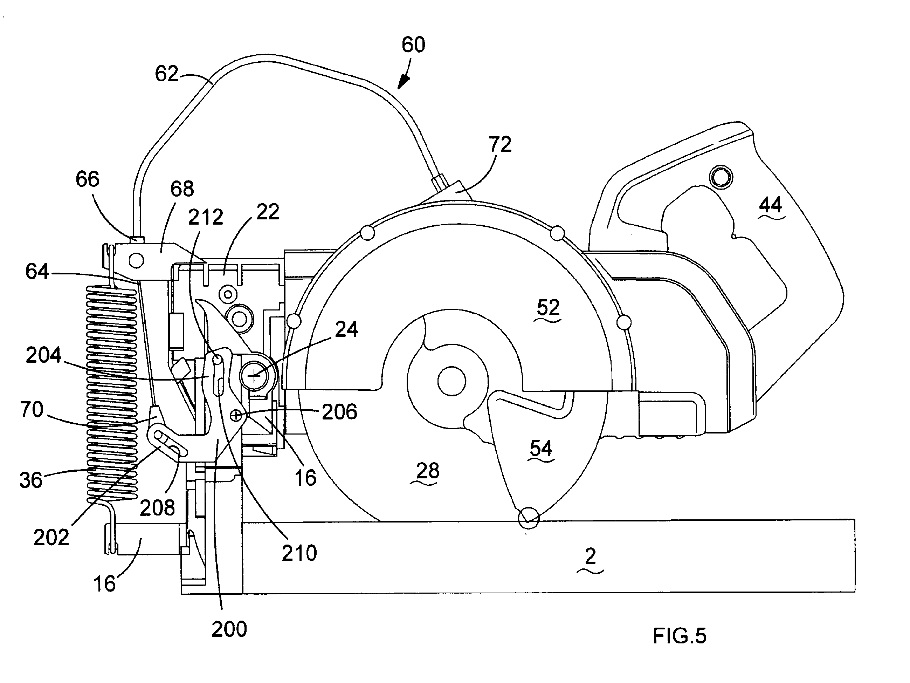

The second embodiment of the present invention will now be described with reference to Figures 5, 6 and 7. Where the same features are present in the second embodiment are present in the first embodiment, the same reference numbers have been used.

The second embodiment of the present invention is the same as the first embodiment except for the mechanism by which the end 70 of the cable 64 of the Bowden cable 60 is connected to the bevel support 16. In the first embodiment, the end 70 is connected directly to the bevel support 16. In the second embodiment, it is connected to the bevel support 16 via a pivotal bracket 200.

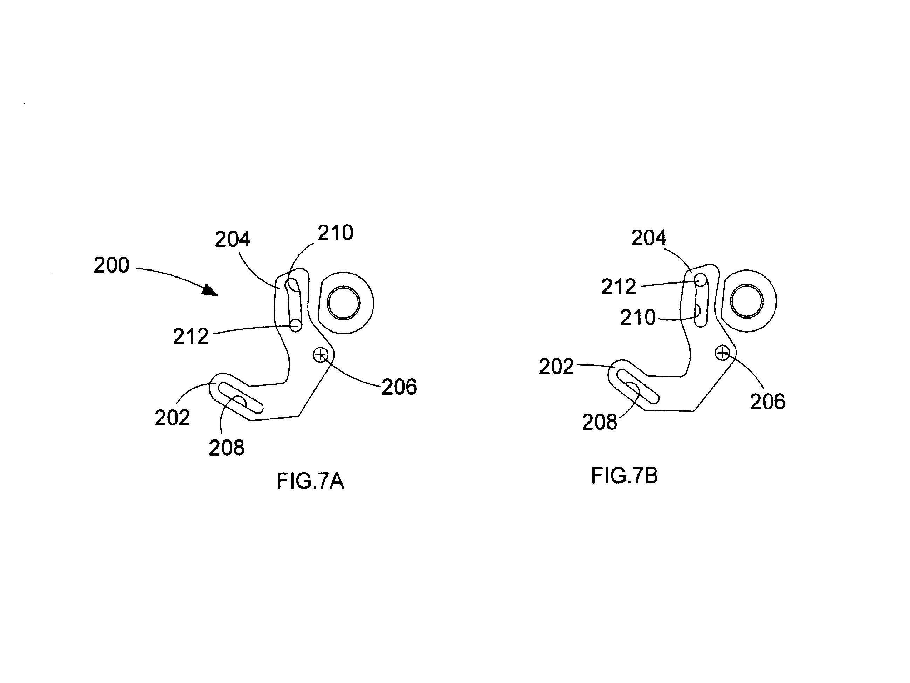

The pivotal bracket is shown in Figures 7A and 7B.

The pivotal bracket 200 comprises two arms 202, 204 which extend from a central pivot point 206 as best seen in Figures 7A and 7B. The pivotal bracket 200 is made from a sheet of metal and of a substantially uniform thickness across its length.

Formed in the lower arm 202 is a straight slot 208. Formed in the upper arm 204 is a curved slot 210.

The pivotal bracket 200 is pivotally mounted on the bevel support 16 at its central pivot point 206 and is capable about a pivot axis, which passes through the pivot point 206 perpendicularly to the surface of the page on which Figures 7A and 7B are located.

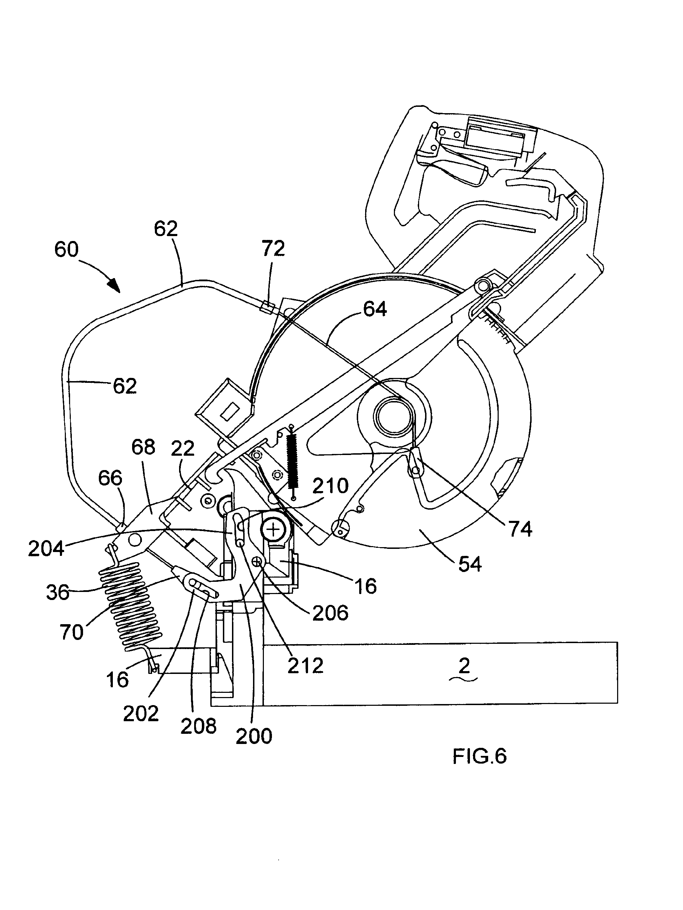

The end 70 of the cable 64 of the Bowden cable 60 connects to the lower arm 202 by engaging with the slot 208. The end 70 of the cable is located and held at the end of the slot 208 which is furthest away from the central pivot 206, as shown in Figures 5 and 6. The end 70 is held in this position by the tension on the cable 64. Though the end 70 is held at the end of the slot 208, the end 70 can pivot relative to the end of the lower arm 202 as shown in Figures 5 and 6. This is to accommodate the changes in both the orientation of the cable 64 of the Bowden cable and the pivotal bracket 200.

A peg 212 is rigidly mounted on the sliding support 22. The peg 212 locates within the curved slot 210 of the upper arm 204 of the pivotal bracket 200. The peg 212 is capable of sliding along the curved slot 210. As the sliding support 22 pivots as the saw assembly moves from its upper position (Figure 6) to its lower position (Figure 5), the peg 212 is forced to slide from the bottom end of the curved slot 210 (Figure 6) to the top end (Figure 5).

As the peg 212 slides within the slot 210, the pivotal bracket 200 pivots about the central pivot point 206 due to the position of the slot 210 following the peg 212, in order to enable peg 212 to slide within the slot 210. The pivotal movement of the pivotal bracket 200 is dependent on the profile of the slot 210. The profile or edge of the slot 210, in effect, acts as a cam surface and the peg 212 acts as cam follower, which follows the cam surface as it slides down the slot 210.

In this particular design, the profile of slot 210 is that of a curve, as best seen in Figures 7A and 7B.

Pivotal movement of the pivotal bracket 200 results in pivotal movement of a lower arm 202 which in turn results in pivotal movement of the end 70 of the cable 64 of the Bowden cable.

The profile of the slot 210 is designed so that as the saw assembly is pivoted from its upper position (Figure 6) to its lower position (Figure 5), the end of the lower arm 202 and hence the end 70 of the cable 64, first pivots downwardly (first part of the movement) and then subsequently pivots upwardly slightly (second part of the movement). As such, the distance between the end 70 of the cable 64 of the first end of the Bowden cable 60 and the end 66 of the sleeve 62 of the first end of the Bowden cable is altered both by the end 66 of the sleeve 62 moving upwards and the end 70 of the cable 64 moving downwards. Movement of the end 66 of the sleeve 62 of the first and of the Bowden cable is directly dependent pivotal position of the sliding support 22. Movement of the end 70 of the cable 64 is dependent on the profile of the slot 210.

The movement of the end 70 of the cable 64 due to the curved slot 210 disclosed in Figures 7A and 7B is first downward and then return slightly upwards. When the sliding support 22 pivots on the bevel support 16 at a uniform rate to move the saw assembly from its upper position to its lover position, and when the end 70 is travelling downwardly (during the first part of the movement), the rate at which the end 66 of the sleeve 62 is moving away from the end 70 of the cable 64 is increased. This results in the pivotal guard pivoting its retracted position at an increased rate. When the sliding support 22 pivots on the bevel support 16 at a uniform rate to move the saw assembly from its upper position to its lover position, and when the end 70 is travelling upwardly (during the second part of the movement), the rate at which the end 66 of the sleeve 62 is moving away from the end 70 of the cable 64 is decreased. This results in the pivotal guard pivoting towards its retracted position at a decreased rate.

This enables the pivotal guard to be retracted at a quicker rate initially, thus exposing the cutting edge sooner when the saw assembly 38 is at a higher position, and then retracted at a slower rate over the latter stage of the pivotal movement as the saw assembly approaches the circular table 4.

When the saw assembly pivots from its lowest position (Figure 5) to its highest position (Figure 6) the peg 212 follows the slot 210 in the opposite direction, causing the reverse movement of the pivotal guard 54, its rate of movement from its retracted position to its enclosed position being altered by the pivotal movement of the pivotal bracket 200.

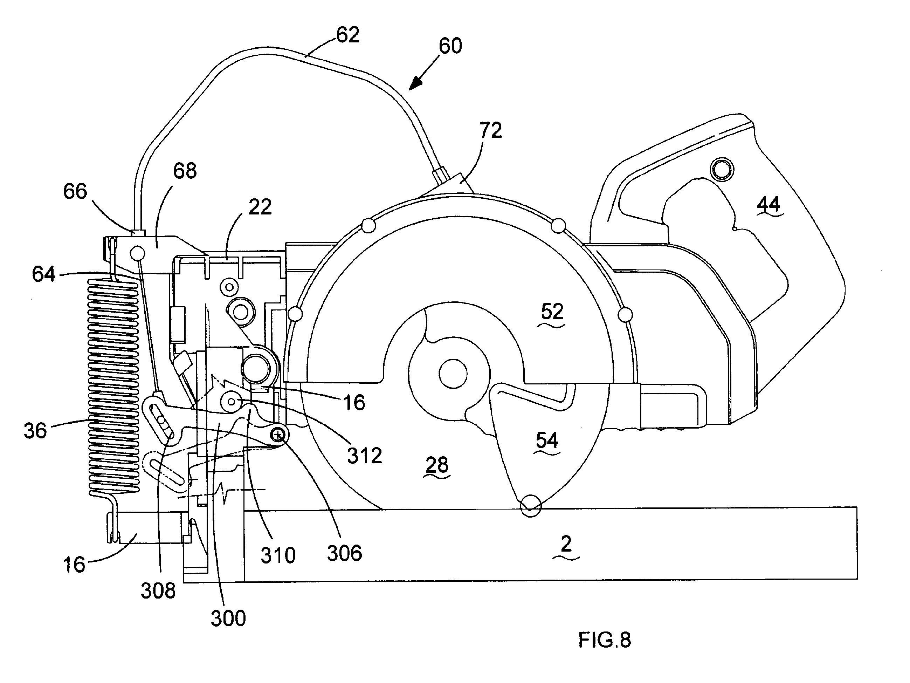

A third embodiment will now be described with reference to Figures 8, 9 and 10. Where the same features are present in the third embodiment which are present in the second embodiment, the same reference numbers have been used. The third embodiment is the same as the second embodiment except that the design of the pivotal bracket 200 in the second embodiment together with the peg 212 has been changed.

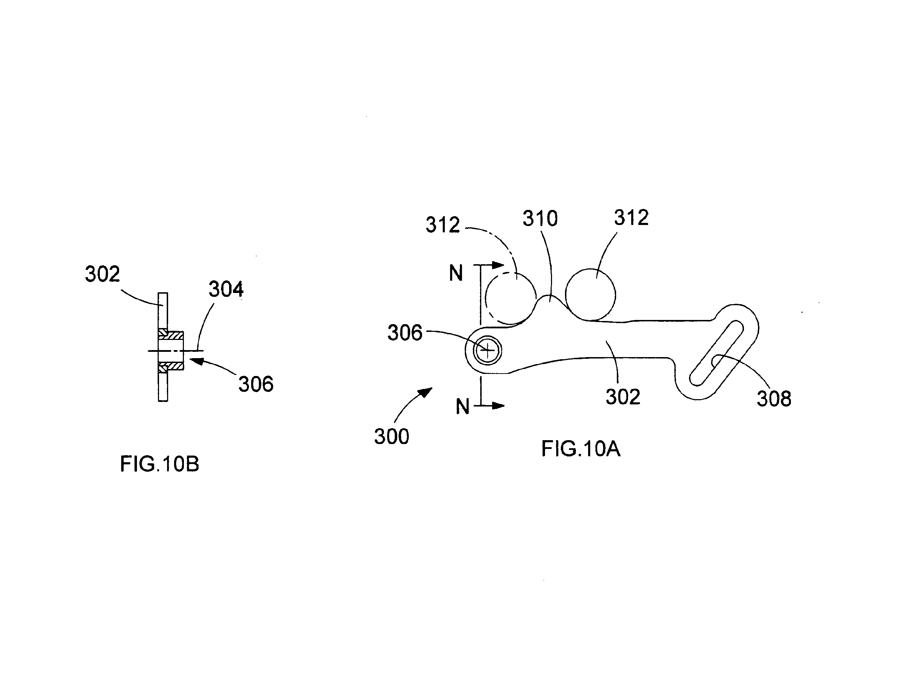

The pivotal bracket 200 has been replaced by a pivotal lever 300 as shown in Figures 10A and 10B. The pivotal lever 300 is pivotally mounted on the bevel support 16.

The pivotal lever 300 is shown in Figures 10A and 10B.

The pivotal lever 300 comprises an arm 302 which extends from a pivot point 306 as best seen in Figure 10A. The pivotal lever 300 is made from a sheet of metal and of a substantially uniform thickness across its length.

Formed at the end of the arm 302 remote from the pivot point 306 is a straight slot 308. Formed on the side of the arm 302 is a curved bulge 310.

The pivotal lever 300 is pivotally mounted on the bevel support 16 at its pivot point 306 and is capable of pivoting about a pivot axis 304 (see Figure 10B), which passes through the pivot point 206, in the direction perpendicular to the surface of the page on which Figure 10A is located.

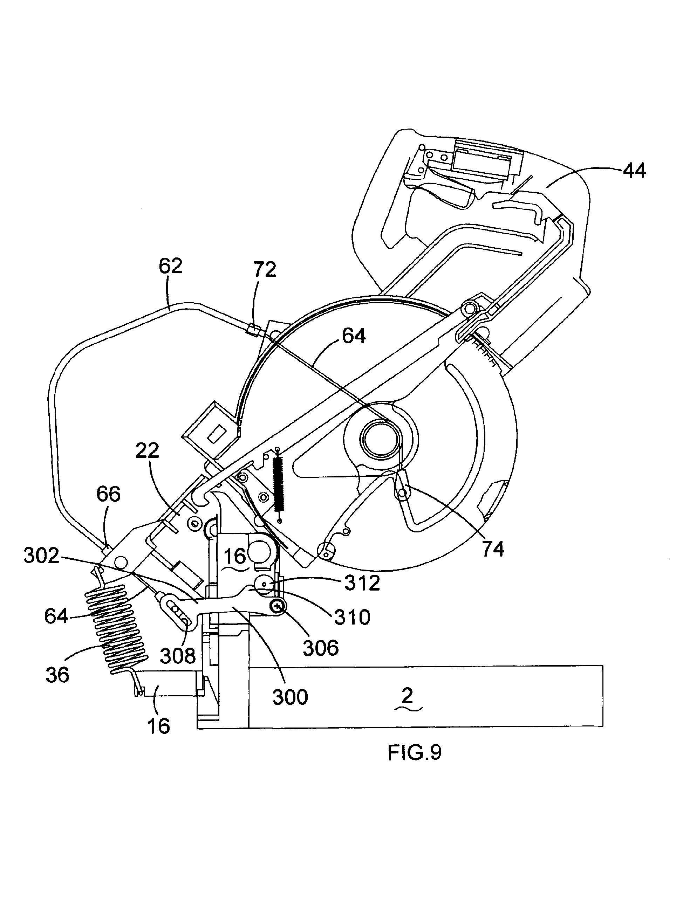

The end 70 of the cable 64 of the Bowden cable 60 connects to the arm 302 by engaging with the slot 308. The end 70 of the cable is located and held at the upper end of the slot 308 as shown in Figure 10A, which end is furthest away from the pivot point 306, as shown in Figures 8 and 9. The end 70 is held in this position by the tension on the cable 64. Though the end 70 is held at the end of the slot 308, the end 70 can pivot relative to the end of the arm 302 as shown in Figures 8 and 9. This is to accommodate the changes in both the orientation of the cable 64 of the Bowden cable and the end of the pivotal lever 300.

A roller 312 is rotatably mounted on the sliding support 22. The roller 312 is mounted using ball bearings to minimise any rotational friction and is capable of freely rotating about its axis. The roller 312 locates against the outer edge of the curved bulge 310 of the arm 302 of the pivotal lever 300. The roller 312 is capable of rolling around the edge of the curved bulge 210. The tension on the cable 64 pulls on the end of the pivotal lever 300 biasing the end of the lever upwards (ie the lever 300 is pivotally biased about the pivot point 306 in a clockwise direction) as shown in Figures 8 and 9 causing the curved bulge 310 to abut against and be held in contact with the roller 312. As the sliding support 22 pivots as the saw assembly moves from its upper position (Figure 9) to its lower position (Figure 8), the roller 312 is forced to roll from the right side of the curved bulge 310 (Figure 9), over the bulge 310, to the left side of the bulge 310 (Figure 8).

As the roller 312 rolls around the bulge 310, the pivotal lever 300 pivots about the central pivot point 206 due to the position of the curved bulge 310 following the roller 312, in order to enable roller 312 to roll over the bulge 210. The pivotal movement of the pivotal lever 300 is dependent on the profile of the bulge 310. The profile or edge of the bulge 310, in effect, acts as a cam surface and the roller 312 acts as a cam follower, which follows the cam surface as it rolls around the bulge 210.

In this particular design, the profile of bulge 310 is that of a curve, as best seen in Figure 10A.

Pivotal movement of the pivotal lever 300 results in pivotal movement of the arm 302 which in turn results in pivotal movement of the end 70 of the cable 64 of the Bowden cable.

The profile of the bulge 310 is designed so that as the saw assembly is pivoted from its upper position (Figure 9) to its lower position (Figure 8), the end of the arm 302 and hence the end 70 of the cable 64, first pivots downwardly (first part of the movement) and then subsequently pivots upwardly slightly (second part of the movement), as shown in the Figures 8 and 9. As such, the distance between the end 70 of the cable 64 of the first end of the Bowden cable 60 and the end 66 of the sleeve 62 of the first end of the Bowden cable is altered both by the end 66 of the sleeve 62 moving upwards and the end 70 of the cable 64 moving downwards. Movement of the end 66 of the sleeve 62 of the first end of the Bowden cable is directly dependent pivotal position of the sliding support 22. Movement of the end 70 of the cable 64 is dependent on the profile of the bulge 310.

The movement of the end 70 of the cable 64 due to the curved bulge 310 disclosed in Figure 10A is first downward and then return slightly upwards. When the sliding support 22 pivots on the bevel support 16 at a uniform rate to move the saw assembly from its upper position to its lover position, and when the end 70 is travelling downwardly (during the first part of the movement), the rate at which the end 66 of the sleeve 62 is moving away from the end 70 of the cable 64 is increased. This results in the pivotal guard pivoting its retracted position at an increased rate. When the sliding support 22 pivots on the bevel support 16 at a uniform rate to move the saw assembly from its upper position to its lover position, and when the end 70 is travelling upwardly (during the second part of the movement), the rate at which the end 66 of the sleeve 62 is moving away from the end 70 of the cable 64 is decreased. This results in the pivotal guard pivoting towards its retracted position at a decreased rate.

This enables the pivotal guard to be retracted at a quicker rate initially, thus exposing the cutting edge sooner when the saw assembly 38 is at a higher position, and then retracted at a slower rate over the latter stage of the pivotal movement as the saw assembly approaches the circular table 4.

When the saw assembly pivots from its lowest position (Figure 8) to its highest position (Figure 9) the roller 312 follows the bulge 310 in the opposite direction (left to right in Figures 8 and 9), causing the reverse movement of the pivotal guard 54, its rate of movement from its retracted position to its enclosed position being altered by the pivotal movement of the pivotal lever 300.

The second and third embodiments of this invention describe how the end 70 of the cable 64 of the Bowden cable 60 is attached to the bevel support 16 via a cam mechanism which operates when the saw unit 38 is pivoted towards the circular table 4 to cause movement of the end 70 of the cable 64 relative to the bevel support 16. The end 66 of the sleeve 62 of the Bowden cable 60 is connected directly to the sliding support 22 and moves relative to the bevel support 16 due to the pivotal movement of the sliding support 22 on the bevel support 16 only. However, a person skilled in the art will appreciate that the end 66 of the sleeve 62 of the Bowden cable 60 can be connected via a cam mechanism to the sliding support 22 so that it moves relative to the sliding support 22 by operation of the cam when the saw unit 38 is pivoted towards the circular table. This movement would be in addition to the movement caused by the pivotal movement of the sliding support 22 on the bevel support 16. This use of a cam with the end 66 of the sleeve 62 can be in addition to or instead of the use of a cam with the end 70 of the cable 64 of the Bowden cable. The construction of such a cam for use with the sleeve 62 can be the same as or similar to that described in the second and third embodiments used with the end 70 of the cable 64.

## Claims

1. A saw comprising:
a base assembly (2, 4) connected to a mounting portion (16);
a saw unit (38) connected to a support portion (22) which is pivotally mounted on the mounting portion (16) to allow the saw unit (38) to pivot towards or away from the base assembly (2, 4), the saw unit (38) having an output drive spindle (48) upon which a circular saw blade (28) can be rigidly mounted to be rotationally driven by a motor, wherein the axis (26) of rotation of the drive spindle (48) being substantially parallel to the axis (24) of pivot between support portion (22) and the mounting portion (16);
at least one pivotal guard (54) pivotally mounted on the saw unit (38) which can pivot from a first position, where it surrounds at least a portion of the lower edge of a saw blade (28) when mounted on the spindle (48), to a second retracted position where the portion of the lower edge of the saw blade (28) is exposed;
wherein the saw unit (38) can move relative to the support portion (22) to change the distance between the axis (26) of rotation of the pivotal guard and the axis (24) of pivot between the support portion (22) and the mounting portion (16); and
a pivotal guard actuating mechanism which is capable of moving the at least one pivotal guard (54) from its first position to its second retracted position when the saw unit (38) is pivoted towards the base assembly (2, 4);
**characterised in that** the pivotal guard actuating mechanism comprises at least one Bowden cable (60) comprising an inner cable (64) slidable within an outer sleeve (62) and which has two ends, each end comprising two parts, a first part being one end of the inner cable (64) and the second part being a corresponding end of the outer sleeve (62), wherein one part of the first end of the Bowden cable is connected to the base assembly (2, 4) and the other part of the first end of the Bowden cable is connected to the saw unit (38) so that pivotal movement of the saw unit (38) towards the base assembly (2, 4) causes relative movement of the cable (64) of the Bowden cable (60) within the sleeve (62) of the Bowden cable (60); and
one part of the second end of the Bowden cable is connected to the at least one pivotal guard (54) and the other part of the second end of the Bowden cable (60) is connected to the saw unit (38) and is arranged so that the relative movement of the cable (64) of the Bowden cable (60) within the sleeve (62) of the Bowden cable (60) due to the pivotal movement of the saw unit (38) towards the base assembly (2, 4) causes the at least one pivotal guard (54) to move from its first position to its second retracted position.

2. A saw as claimed in claim 1, wherein the support portion (22) is connected to the saw unit (38) via at least one rail (30, 32).

3. A saw as claimed in claim 2, wherein either the support portion (22) or the saw unit (38) is fixed to the at least one rail (30, 32) and the other slides along the at least one rail (30, 32) to change the distance.

4. A saw as claimed in any of claims 1, 2, or 3, wherein the mounting portion (16) can pivot relative to the base assembly (2, 4).

5. A saw as claimed in any of claims 1, 2, 3 or 4, wherein the base assembly comprises a table (4) rotatably mounted within a base (2), the mounting portion (16) being mounted on the table (4).

6. A saw as claimed in any one of the preceding claims, wherein one part of the first end of the Bowden cable is connected to the base assembly (2, 4) via the mounting portion (16).

7. A saw as claimed in either claims 1 to 5 or 6, wherein the other part of the first end of the Bowden cable is connected to the saw unit (38) via the support portion (22).

8. A saw as claimed in any one of the previous claims, wherein one part of the first end of the Bowden cable remains stationary relative to the base assembly (2, 4) whilst the other part of the first end of the Bowden cable moves when the saw unit (38) pivots towards the base assembly (2, 4) in order to generate the relative movement of the cable (64) of the Bowden cable (60) within the sleeve (62) of the Bowden cable (60).

9. A saw as claimed in any one of claims 1 to 7, wherein both parts of the first end of the Bowden cable move relative to the base assembly (2, 4) when the saw unit (38) pivotally moves towards the base assembly (2, 4) in order to generate relative movement of the cable (64) of the Bowden cable (60) within the sleeve (62) of the Bowden cable.

10. A saw as claimed in any one of claims 8 or 9, wherein movement of one or both parts of the first end relative to base assembly (2, 4) is caused by a cam mechanism which operates when the saw unit (38) pivotally moves towards the base assembly (2, 4).

11. A saw as claimed in any one of the previous claims, wherein one part of the first end of the Bowden cable is connected to the base assembly (2, 4) via a cam mechanism.

12. A saw as claimed in claim 11, wherein one part of the first end of the Bowden cable is connected to the base assembly (2, 4) via the mounting portion, which is connected to the cam mechanism.

13. A saw as claimed in any one of the previous claims, wherein the other part of the first end of the Bowden cable is connected to the saw unit (38) via a cam mechanism.

14. A saw as claimed in claim 13, wherein the other part of the first end of the Bowden cable is connected to the saw unit (38) via the support portion (22), which is connected to the cam mechanism.

15. A saw as claimed in any of the previous claims, wherein there is provided a cam mechanism comprising two component parts, a first component part comprising a cam and a second component part comprising a cam follower, one component part connected to the base assembly (2, 4), the other component part connected to the saw unit (38) and arranged so that the cam follower rides along the cam when the saw unit (38) pivotally moves towards the base assembly (2, 4), wherein one part of the first end of the Bowden cable is connected to one of the component parts of the cam mechanism and which is moved by that component part in response to the cam follower riding along the cam.

16. A saw as claimed in anyone of claims 10 to 15, wherein the cam is formed on a pivotal lever pivotally mounted on the base assembly, the cam follower being connected to the saw unit.

17. A saw as claimed in claim 16, wherein the cam is a groove in the lever.

18. A saw as claimed in claim 16, wherein the cam is formed on the edge of the lever, the edge having a predetermined profile.

## Patentansprüche

1. Säge, umfassend:
eine Basisbaugruppe (2, 4), die mit einem Anbringungsabschnitt (16) verbunden ist;
eine Sägeeinheit (38), die mit einem Stützabschnitt (22) verbunden ist, welcher schwenkbar an dem Anbringungsabschnitt (16) angebracht ist, um zu ermöglichen, dass die Sägeeinheit (38) zur Basisbaugruppe (2, 4) hin oder davon weg schwenkt, wobei die Sägeeinheit (38) eine Abtriebsspindel (48) aufweist, auf der ein kreisförmiges Sägeblatt (28) zum Drehantrieb durch einen Motor starr angebracht sein kann, wobei die Drehachse (26) der Treibspindel (48) im Wesentlichen parallel zur Schwenkachse (24) zwischen dem Stützabschnitt (22) und dem Anbringungsabschnitt (16) ist;
zumindest einen schwenkbaren Schutz (54), der schwenkbar auf der Sägeeinheit (38) angebracht ist und aus einer ersten Position, in der er zumindest einen Abschnitt der Unterkante eines Sägeblatts (28), wenn es auf der Spindel (48) angebracht ist, umgibt, zu einer zweiten, eingezogenen Position schwenken kann, in der der Abschnitt der Unterkante des Sägeblatts (28) freiliegt;
wobei sich die Sägeeinheit (38) relativ zum Stützabschnitt (22) zum Ändern des Abstands zwischen der Drehachse (26) des schwenkbaren Schutzes und der Schwenkachse (24) zwischen dem Stützabschnitt (22) und dem Anbringungsabschnitt (16) bewegen kann; und
einen Schwenkschutzstellmechanismus, der imstande ist, den zumindest einen schwenkbaren Schutz (54) aus seiner ersten Position zu seiner zweiten, eingezogenen Position zu bewegen, wenn die Sägeeinheit (38) zur Basisbaugruppe (2, 4) hin geschwenkt wird;
**dadurch gekennzeichnet, dass** der Schwenkschutzstellmechanismus zumindest einen Bowdenzug (60) umfasst, der einen inneren Zug (64) umfasst, welcher innerhalb einer äußeren Buchse (62) gleitbar ist und zwei Enden aufweist, wobei jedes Ende zwei Teile umfasst, wobei ein erstes Teil ein Ende des inneren Kabels (64) ist und das zweite Teil ein entsprechendes Ende der äußeren Buchse (62) ist, wobei ein Teil des ersten Endes des Bowdenzugs derart mit der Sägeeinheit (38) verbunden ist, dass eine Schwenkbewegung der Sägeeinheit (38) zur Basisbaugruppe (2, 4) hin eine relative Bewegung des Zugs (64) des Bowdenzugs (60) innerhalb der Buchse (62) des Bowdenzugs (60) bewirkt; und
wobei ein Teil des zweiten Endes des Bowdenzugs mit dem zumindest einen schwenkbaren Schutz (54) verbunden ist und das andere Teil des zweiten Endes des Bowdenzugs (60) mit der Sägeeinheit (38) verbunden ist und derart angeordnet ist, dass die relative Bewegung des Zugs (64) des Bowdenzugs (60) innerhalb der Buchse (62) des Bowdenzugs (60) aufgrund der Schwenkbewegung der Sägeeinheit (38) zur Basisbaugruppe (2, 4) hin bewirkt, dass sich der zumindest eine schwenkbare Schutz (54) aus seiner ersten Position zu seiner zweiten, eingezogenen Position bewegt.

2. Säge nach Anspruch 1, wobei der Stützabschnitt (22) über zumindest eine Schiene (30, 32) mit der Sägeeinheit (38) verbunden ist.

3. Säge nach Anspruch 2, wobei entweder der Stützabschnitt (22) oder die Sägeeinheit (38) an der zumindest einen Schiene (30, 32) befestigt ist und der/die andere zum Ändern des Abstands entlang der zumindest einen Schiene (30, 32) gleitet.

4. Säge nach einem der Ansprüche 1, 2 oder 3, wobei der Anbringungsabschnitt (16) bezüglich der Basisbaugruppe (2, 4) schwenken kann.

5. Säge nach einem der Ansprüche 1, 2, 3 oder 4, wobei die Basisbaugruppe einen Tisch (4) umfasst, der drehbar innerhalb einer Basis (2) angebracht ist, wobei der Anbringungsabschnitt (16) auf dem Tisch (4)angebracht ist.

6. Säge nach einem der vorhergehenden Ansprüche, wobei ein Teil des ersten Endes des Bowdenzugs über den Anbringungsabschnitt (16) mit der Basisbaugruppe (2, 4) verbunden ist.

7. Säge nach einem der Ansprüche 1 bis 5 oder 6, wobei das andere Teil des ersten Endes des Bowdenzugs über den Stützabschnitt (22) mit der Sägeeinheit (38) verbunden ist.

8. Säge nach einem der vorhergehenden Ansprüche, wobei ein Teil des ersten Endes des Bowdenzugs bezüglich der Basisbaugruppe (2, 4) ortsfest bleibt, während sich das andere Teil des ersten Endes des Bowdenzugs bewegt, wenn die Sägeeinheit (38) zur Basisbaugruppe (2, 4) hin schwenkt, um die relative Bewegung des Zugs (64) des Bowdenzugs (60) innerhalb der Buchse (62) des Bowdenzugs (60) zu erzeugen.

9. Säge nach einem der Ansprüche 1 bis 7, wobei sich beide Teile des ersten Endes des Bowdenzugs bezüglich der Basisbaugruppe (2, 4) bewegen, wenn die Sägeeinheit (38) zur Basisbaugruppe (2, 4) hin schwenkt, um die relative Bewegung des Zugs (64) des Bowdenzugs (60) innerhalb der Buchse (62) des Bowdenzugs (60) zu erzeugen.

10. Säge nach einem der Ansprüche 8 oder 9, wobei die Bewegung von einem oder beiden Teilen des ersten Endes bezüglich der Basisbaugruppe (2, 4) durch ein Kurvengetriebe bewirkt ist, das arbeitet, wenn sich die Sägeeinheit (38) schwenkend zur Basisbaugruppe (2, 4) hin bewegt.

11. Säge nach einem der vorhergehenden Ansprüche, wobei ein Teil des ersten Endes des Bowdenzugs über ein Kurvengetriebe mit der Basisbaugruppe (2, 4) verbunden ist.

12. Säge nach Anspruch 11, wobei ein Teil des ersten Endes des Bowdenzugs über den Anbringungsabschnitt mit der Basisbaugruppe (2, 4) verbunden ist, welcher mit dem Kurvengetriebe verbunden ist.

13. Säge nach einem der vorhergehenden Ansprüche, wobei das andere Teil des ersten Endes des Bowdenzugs über ein Kurvengetriebe mit der Sägeeinheit (38) verbunden ist.

14. Säge nach Anspruch 13, wobei das andere Teil des ersten Endes des Bowdenzugs über den Stützabschnitt (22) mit der Sägeeinheit (38) verbunden ist, welcher mit dem Kurvengetriebe verbunden ist.

15. Säge nach einem der vorhergehenden Ansprüche, wobei ein Kurvengetriebe vorgesehen ist, das zwei Komponententeile umfasst, wobei ein erstes Komponententeil einen Nocken umfasst und ein zweites Komponententeil einen Nockenmitnehmer umfasst, wobei ein Komponententeil mit der Basisbaugruppe (2, 4) verbunden ist, wobei das andere Komponententeil mit der Sägeeinheit (38) verbunden und derart angeordnet ist, dass der Nockenmitnehmer entlang dem Nocken läuft, wenn sich die Sägeeinheit (38) schwenkend zur Basisbaugruppe (2, 4) hin bewegt, wobei ein Teil des ersten Endes des Bowdenzugs mit einem der Komponententeile des Kurvengetriebes verbunden ist und durch das Komponententeil in Reaktion auf den Nockenmitnehmer, der den Nocken entlang läuft, bewegt wird.

16. Säge nach einem der Ansprüche 10 bis 15, wobei der Nocken auf einem Schwenkhebel ausgebildet ist, der schwenkbar auf der Basisbaugruppe angebracht ist, wobei der Nockenmitnehmer mit der Sägeeinheit verbunden ist.

17. Säge nach Anspruch 16, wobei der Nocken eine Nut im Hebel ist.

18. Säge nach Anspruch 16, wobei der Nocken an der Kante des Hebels ausgebildet ist, wobei die Kante ein vorgegebenes Profil aufweist.

## Revendications

1. Scie comprenant :
un ensemble de base (2, 4) raccordé à une portion de montage (16) ;
une unité de scie (38) raccordée à une portion de support (22) qui est montée à pivotement sur la portion de montage (16) pour permettre à l'unité de scie (38) de pivoter vers l'ensemble de base (2, 4) et de s'en écarter, l'unité de scie (38) ayant une broche d'entraînement de sortie (48) sur laquelle une lame de scie circulaire (28) peut être montée de façon rigide pour être entraînée en rotation par un moteur, dans laquelle l'axe (26) de rotation de la broche d'entraînement (48) est sensiblement parallèle à l'axe (24) du pivot entre la portion de support (22) et la portion de montage (16) ;
au moins un élément de garde pivotant (54) monté à pivotement sur l'unité de scie (38), qui peut pivoter d'une première position, où il entoure au moins une portion du bord inférieur d'une lame de scie (28) lorsqu'elle est montée sur la broche (48), à une seconde position rétractée, où la portion du bord inférieur de la lame de scie (28) est exposée ;
dans laquelle l'unité de scie (38) peut se déplacer par rapport à la portion de support (22) pour modifier la distance entre l'axe (26) de rotation de l'élément de garde pivotant et l'axe (24) du pivot entre la portion de support (22) et la portion de montage (16) ; et
un mécanisme d'actionnement de l'élément de garde pivotant, qui est à même de déplacer le au moins un élément de garde pivotant (54) de sa première position à sa seconde position rétractée lorsque l'unité de scie (38) subit un pivotement vers l'ensemble de base (2, 4) ;
**caractérisée en ce que** le mécanisme d'actionnement de l'élément de garde pivotant comprend au moins un câble Bowden (60) comprenant un câble interne (64) qui peut coulisser dans un manchon externe (62) et qui a deux extrémités, chaque extrémité comprenant deux parties, une première partie étant une extrémité du câble interne (64) et la seconde partie étant une extrémité correspondante du manchon externe (62), dans laquelle une partie de la première extrémité du câble Bowden est raccordée à l'ensemble de base (2, 4) et l'autre partie de la première extrémité du câble Bowden est raccordée à l'unité de scie (38) de sorte que le mouvement pivotant de l'unité de scie (38) vers l'ensemble de base (2, 4) provoque un mouvement relatif du câble (64) du câble Bowden (60) dans le manchon (62) du câble Bowden (60) ; et
une partie de la seconde extrémité du câble Bowden est raccordée au au moins un élément de garde pivotant (54) et l'autre partie de la seconde extrémité du câble Bowden (60) est raccordée à l'unité de scie (38) et est aménagée de sorte que le mouvement relatif du câble (64) du câble Bowden (60) dans le manchon (62) du câble Bowden (60) dû au mouvement pivotant de l'unité de scie (38) vers l'ensemble de base (2, 4) amène le au moins un élément de garde pivotant (54) à se déplacer de sa première position à sa seconde position rétractée.

2. Scie selon la revendication 1, dans laquelle la portion de support (22) est raccordée à l'unité de scie (38) via au moins un rail (30, 32).

3. Scie selon la revendication 2, dans laquelle la portion de support (22) ou l'unité de scie (38) est fixée au au moins un rail (30, 32) et l'autre coulisse le long du au moins un rail (30, 32) pour modifier la distance.

4. Scie selon l'une quelconque des revendications 1, 2 ou 3, dans laquelle la portion de montage (16) peut pivoter par rapport à l'ensemble de base (2, 4).

5. Scie selon l'une quelconque des revendications 1, 2, 3 ou 4, dans laquelle l'ensemble de base comprend une table (4) montée à rotation dans une base (2), la portion de montage (16) étant montée sur la table (4).

6. Scie selon l'une quelconque des revendications précédentes, dans laquelle une partie de la première extrémité du câble Bowden est raccordée à l'ensemble de base (2, 4) via la portion de montage (16).

7. Scie selon l'une quelconque des revendications 1 à 5 ou 6, dans laquelle l'autre partie de la première extrémité du câble Bowden est raccordée à l'unité de scie (38) via la portion de support (22).

8. Scie selon l'une quelconque des revendications précédentes, dans laquelle une partie de la première extrémité du câble Bowden reste stationnaire par rapport à l'ensemble de base (2, 4), tandis que l'autre partie de la première extrémité du câble Bowden se déplace lorsque l'unité de scie (38) pivote vers l'ensemble de base (2, 4) afin de générer le mouvement relatif du câble (64) du câble Bowden (60) dans le manchon (62) du câble Bowden (60).

9. Scie selon l'une quelconque des revendications 1 à 7, dans laquelle les deux parties de la première extrémité du câble Bowden se déplacent par rapport à l'ensemble de base (2, 4) lorsque l'unité de scie (38) se déplace par pivotement vers l'ensemble de base (2, 4) afin de générer un mouvement relatif du câble (64) du câble Bowden (60) dans le manchon (62) du câble Bowden.

10. Scie selon l'une quelconque des revendications 8 ou 9, dans laquelle le mouvement de l'une ou des deux parties de la première extrémité par rapport à l'ensemble de base (2, 4) est provoqué par un mécanisme à came qui opère lorsque l'unité de scie (38) se déplace à pivotement vers l'ensemble de base (2, 4).

11. Scie selon l'une quelconque des revendications précédentes, dans laquelle une partie de la première extrémité du câble Bowden est raccordée à l'ensemble de base (2, 4) via un mécanisme à came.

12. Scie selon la revendication 11, dans laquelle une partie de la première extrémité du câble Bowden est raccordée à l'ensemble de base (2, 4) via la portion de montage, qui est raccordée au mécanisme à came.

13. Scie selon l'une quelconque des revendications précédentes, dans laquelle l'autre partie de la première extrémité du câble Bowden est raccordée à l'unité de scie (38) via un mécanisme à came.

14. Scie selon la revendication 13, dans laquelle l'autre partie de la première extrémité du câble Bowden est raccordée à l'unité de scie (38) via la portion de support (22), qui est raccordée au mécanisme à came.

15. Scie selon l'une quelconque des revendications précédentes, dans laquelle il est prévu un mécanisme à came comprenant deux parties constituantes, une première partie constituante comprenant une came et une seconde partie constituante comprenant un suiveur de came, une partie constituante étant raccordée à l'ensemble de base (2, 4), l'autre partie constituante étant raccordée à l'unité de scie (38) et aménagée de sorte que le suiveur de came courre le long de la came lorsque l'unité de scie (38) se déplace à pivotement vers l'ensemble de base (2, 4), dans laquelle une partie de la première extrémité du câble Bowden est raccordée à l'une des parties constituantes du mécanisme à came et qui est déplacée par cette partie constituante en réponse au suiveur de came qui court le long de la came.

16. Scie selon l'une quelconque des revendications 10 à 15, dans laquelle la came est formée sur un levier pivotant monté à pivotement sur l'ensemble de base, le suiveur de came étant raccordé à l'unité de scie.

17. Scie selon la revendication 16, dans laquelle la came est une rainure dans le levier.

18. Scie selon la revendication 16, dans laquelle la came est formée sur le bord du levier, le bord ayant un profil prédéterminé.
